# EUROPÄISCHE PATENTSCHRIFT

(11) **EP 0 416 140 B1**
(45) Veröffentlichungstag und Bekanntmachung des Hinweises auf die Patenterteilung: **21.12.1994**
(21) Anmeldenummer: 89116309.9
(22) Anmeldetag: 04.09.1989
(51) Int. Cl.: G21C 19/30, C01B 3/58, B01D 53/36, B01J 12/00, B01D 50/00

(54) **Vorrichtung zur Entfernung von Wasserstoff und Schadstoffen aus einem Wasserstoff und Sauerstoff enthaltenden Gasgemisch**
Device for removing hydrogen and harmful substances from a gas mixture containing hydrogen and oxygen
Dispositif d'élimination de l'hydrogène et des substances toxiques dans un mélange gazeux contenant hydrogène et oxygène

(43) Veröffentlichungstag der Anmeldung: 13.03.1991
(73) Patentinhaber: Gesellschaft für Reaktorsicherheit (GRS) mbH, 50667 Köln (DE)
(72) Erfinder: Chakraborty, Amiya Kumar, Dr., D-5042 Erftstadt (DE)
(74) Vertreter: Hoffmann, Eckart, Dipl.-Ing.

(56) Entgegenhaltungen:
- EP-A- 0 303 144
- DE-A- 3 604 416
- DE-A- 3 725 290
- US-A- 4 228 132

## Beschreibung

Die Erfindung betrifft eine Vorrichtung nach dem Oberbegriff des Patentanspruchs 1.

Eine solche Vorrichtung ist aus der DE-A-36 04 416 bekannt. Wie in dieser Druckschrift ausführlich dargelegt, tritt das Problem, Wasserstoff aus einem Gasgemisch zu beseitigen, insbesondere bei Kernreaktorunfällen auf, bei denen Wasserstoff in die sauerstoffhaltige Atmosphäre des Sicherheitsbehälters oder eines Druckabbausystems des Kernreaktors austritt und infolgedessen Explosionsgefahr besteht. Zur Beseitigung des Wasserstoffs macht die bekannte Vorrichtung von Metallen Gebrauch, die eine hohe Aufnahmefähigkeit für Wasserstoff, auch bei geringem Wasserstoffpartialdruck im Gasgemisch aufweisen. Zur Verhinderung von Oxidation sind die Metalle mit einer wasserstoffdurchlässigen Schutzschicht überzogen. Dabei kann für die Schutzschicht ein Material verwendet werden, das als Katalysator für die Oxidation von Wasserstoff mit Sauerstoff zu Wasser wirkt.

Das wasserstoffaufnehmende Metall kann entweder selbsttragend oder als Schicht auf einer Trägeranordnung ausgebildet sein. Für Zwecke des Einsatzes als Sicherheitsvorrichtung, die nur im Störungsfall benötigt wird, ist bei der bekannten Vorrichtung vorgesehen, daß die mit der gegebenenfalls katalysierenden Schutzschicht versehene Trägeranordnung innnerhalb eines geschlossenen Behälters untergebracht ist, der erst im Störungsfall, etwa druckabhängig, geöffnet wird. Bei einer Ausführungsform der bekannten Vorrichtung weist dieser Behälter an seinem oberen und seinem unteren Ende je eine Berstscheibe auf, die sich im Störungsfall ablösen. Innerhalb des Behälters befindet sich ein Paket aus den beschichteten, Wasserstoff aufnehmenden Metallen. Das umgebende Gasgemisch strömt nach Ablösen der Berstscheiben in den Behälter ein, wobei in dem Behälter eine konvektive Gasströmung vom Boden des Behälters zum Kopf entsteht. Zur Verstärkung dieser Gasströmung verengt sich der Strömungsquerschnitt im Kopf des Behälters.

Bei einer anderen Ausführungsform der bekannten Vorrichtung ist eine Folie aus dem beschichteten, Wasserstoff aufnehmenden Metall aufgerollt in einem Behälter angeordnet. Der Behälter ist an einer Decke aufgehängt und öffnet sich im Störungsfall, so daß die aufgerollte Folie abrollen kann und eine große Kontaktfläche mit dem Gasgemisch entsteht.

Eine ähnliche Vorrichtung ist aus der DE-A 37 25 290 bekannt. Diese Druckschrift offenbart ein als Katalysator besonders gut geeignetes Material, mit dem eine netz- oder blechartige Trägeranordnung ein- oder beidseitig beschichtet ist. Die beschichtete Trägeranordnung ist gefaltet oder aufgerollt in einem gasdichten Gehäuse enthalten, das sich erst im Störungsfall öffnet, so daß sich dann die Trägeranordnung entfalten oder abrollen kann. Die in dieser Druckschrift offenbarten Träger- und Katalysatormaterialien sind auch im Rahmen der vorliegenden Erfindung gut geeignet.

Während des Kernschmelzens in einem Reaktordruckbehälter (RDB) wird eine Temperaturerhöhung bis 2400°C erreicht, wobei große Mengen an Spaltprodukten und Strukturmaterialien in die Atmosphäre des Sicherheitsbehälters freigesetzt werden. Es kommt dort zu einem Gemisch von Wasserdampf und Gasen, in dem Aerosolpartikel mit einer maximalen Massenkonzentration von etwa 20 g/m³ suspendiert sein können (vgl. H.G. Friedrichs und E. Schrödl "Neue Ergebnisse zur Spaltproduktfreisetzung aus dem Kern und Reaktorgebäude bei Unfällen", 10. GRS-Fachgespräch, Köln, 12./13. November 1986). So können sich zum Beispiel im Niederdruck-Pfad zu Beginn der Schmelz-Beton-Wechselwirkung 1 bis 3 t dispergierter Masse luftgetragen im SB befinden. Der bei weitem größte Massenanteil, mehr als 95%, ist nicht radioaktiv. Doch ist der größte Anteil der radioaktiven Substanzen an Aerosolpartikel gebunden. Die eingangs erwähnte Freisetzung von Wasserstoff bei Reaktorunfällen fällt zeitlich mit der vorgenannten Freisetzung von Aerosolen zusammen.

Aufgabe der Erfindung ist es, eine Vorrichtung der eingangs angegebenen Art zu schaffen, die in der Lage ist, aus einem Gasgemisch gleichzeitig Wasserstoff und Schadstoffe zu beseitigen.

Diese Aufgabe wird erfindungsgemäß durch die kennzeichnenden Merkmale des Patentanspruchs 1 gelöst.

Vorteilhafte Weiterbildungen der Erfindung sind in den Unteransprüchen gekennzeichnet.

Das Entfernen größerer Mengen von Wasserstoff, im Sicherheitsbehälter eines Reaktors bannt die Detonationsgefahr. Das Entfernen der überwiegend als Aerosole vorliegenden Schadstoffe ist Voraussetzung zur Entlastung eines mit hohem Innendruck beaufschlagten Sicherheitsbehälters durch kontrolliertes Entlüften.

Es ist aus dem eingangs erörterten Stand der Technik bekannt, eine Katalysatoranordnung im Störungsfall auszudehnen, so daß eine große Kontaktfläche entsteht. Es ist ebenfalls bekannt, daß dabei eine konvektive Gasströmung längs der Katalysatoranordnung entsteht. Die Erfindung macht sich diese an sich bekannte Tatsache dadurch zunutze, daß aufgrund entsprechender Ausbildung der Katalysatoranordnung unter Ausnutzung eines Kamineffektes eine so große Druckdifferenz längs der Katalysatoranordnung entsteht, daß unter Aufrechterhaltung einer ausreichenden Strömung diese Stromung durch Filter geleitet werden kann, welche die vorwiegend in Form von Aerosolen vorhandenen Schadstoffe ausfiltern. Auf diese Weise können mit einer einfachen Vorrichtung passiv, d.h. ohne Einsatz von Hilfsenergie, gleichzeitig Wasserstoff und dispergierte Schadstoffe verschiedenster Art beseitigt werden.

Für diesen Zweck geeignete Filter, sog. HEPA-Filter (High-Efficiency-Particulate-Air) sind bekannt. Sie zeichnen sich durch eine hohe Filterwirkung bei hoher Feuchtigkeit und relativ geringe Druckdifferenz aus. Durch den Einbau der Filter in die Vorrichtung zur Entfernung von Wasserstoff werden die in der Luft dispergierten Aerosole innerhalb der Vorrichtung festgehalten. Die Menge der festgehaltenen Aerosole hängt vom Ort und von der Anzahl der Vorrichtungen ab. Als Trägermaterial und als katalysierendes Material der Katalysatoranordnung kommen die aus dem eingangs erwähnten Stand der Technik bekannten Materialien in Betracht, auf die hier nicht weiter eingegangen werden soll.

Ausführungsbeispiele der Erfindung werden nachfolgend anhand der schematischen Zeichnungen näher erläutert. Es zeigen:
- Fig. 1a: eine erste Ausführungsform der Vorrichtung, teilweise im Schnitt
- Fig. 1b: die erste Ausführungsform der Erfindung im Bereitschaftszustand in einem Behälter,
- Fig. 1c: einen Längsschnitt eines oberen Teils der Anordnung von Fig. 1a
- Fig. 2a: eine zweite Ausführungsform der Erfindung,
- Fig. 2b: die zweite Ausführungsform der Erfindung im Bereitschaftszustand in einem Behälter,
- Fig. 3a: eine dritte Ausführungsform der Erfindung im Bereitschaftszustand in einem Behälter,
- Fig. 3b: die dritte Ausführungsform in einem Betriebszustand, teilweise in Schnittdarstellung, und
- Fig. 3c: eine vergrößerte Darstellung eines Teiles der dritten Ausführungsform.

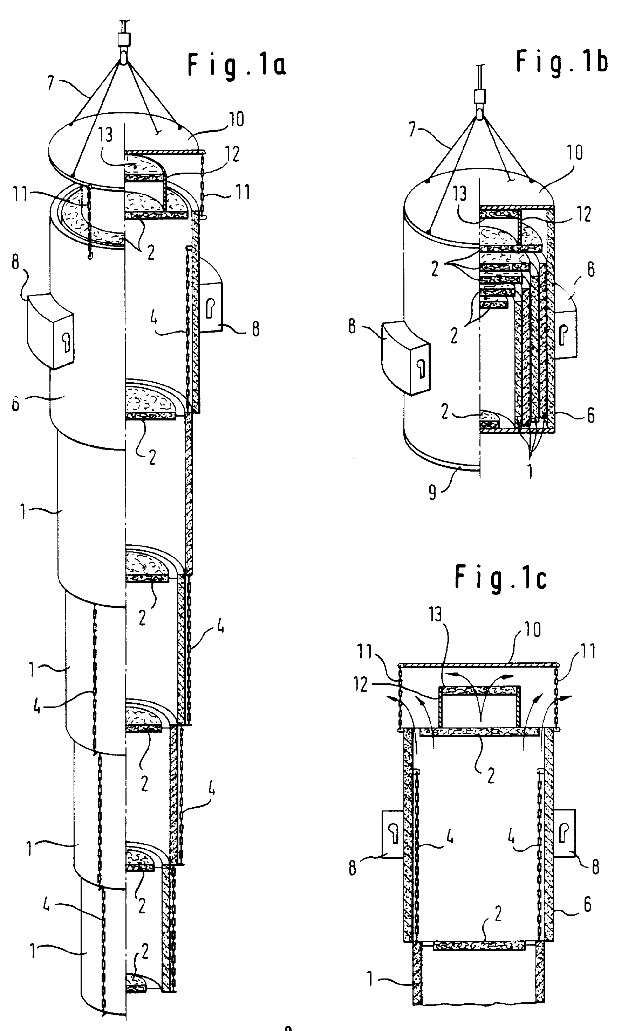

In den Fig. 1a bis 1c ist eine erste Ausführungsform der Erfindung schematisch dargestellt.

Gemäß Fig. 1a setzt sich die Vorrichtung aus einer Vielzahl von Zylindern 1 zusammen, die mittels flexibler Tragmittel 4, z.B. Ketten, so aneinanderhängen, daß sie einen im wesentlichen zylindrischen und annähernd dichten Schacht bilden, wobei zwischen dem unteren Ende eines Zylinders und dem oberen Ende des sich nach unten anschließenden Zylinders kein größerer Abstand besteht, d.h. diese Enden liegen etwa in einer Ebene. Der Innendurchmesser jedes Zylinders ist etwas größer als der Außendurchmesser des an ihn unmittelbar angehängten Zylinders, während die Länge aller Zylinder im wesentlichen gleich ist. Durch Ineinanderschachteln der Zylinder läßt sich deshalb die in Fig. 1a gezeigte Schachtstruktur gemäß Darstellung in Fig. 1b auf die Höhe etwa eines Zylinders zusammenschieben.

Um die Katalysationsfähigkeit der Katalysatoranordnung über einen möglichst langen Zeitraum zu gewährleisten, ist es vorteilhaft, die Katalysatoranordung in einer Schutzatmosphäre (vorzugsweise unter einem leichten Überdruck), etwa einer Argonatmosphäre, zu halten und erst im Störungsfall der Atmosphäre beispielsweise des Sicherheitsbehälters auszusetzen. Dies läßt sich leicht bewerkstelligen, wenn man die Vorrichtung im Bereitschaftszustand in der in Fig. 1b dargestellten zusammengeschobenen Form in einem beispielsweise mit Argon gefüllten Behälter 6 aufbewahrt, der über eine entsprechende Traganordnung 7 beispielsweise an der Decke des Sicherheitsbehälters aufgehängt wird. Bei dem Behälter 6 handelt es sich im vorliegenden Fall zweckmäßigerweise um einen zylindrischen Behälter, dessen Innenwand auch mit dem Katalysatormaterial beschichtet ist. Ein Deckel 10 und ein Boden 9 verschließen den Behälter gasdicht und lösen sich erst im Bedarfsfall. Der Behälter 6 ist mit dem Deckel 10 zusätzlich über flexible Tragmittel 11, z.B. Ketten, verbunden. Ferner ist in dargestellter Weise mit dem Behälter 6 der durchmessergrößte Zylinder 1, mit diesem der nächst kleinere etc. über flexible Tragmittel 4, z.B. Ketten, verbunden. Das Lösen von Deckel 10 und Boden 9 vom Behälter 6 erfolgt mit Hilfe von Berstscheiben oder, besser noch, mit Hilfe von temperaturabhängigen Sensoren, beispielweise Bimetallanordnungen. Die temperaturabhängigen Sensoren sprechen im Störungsfall auf eine Temperaturerhöhung an und lösen Deckel 10 und Boden 9 vom Behälter 6. Der Behälter 6 fällt dann aufgrund der Schwerkraft nach unten, bis die Ketten 11 gespannt sind. Ebenfalls aufgrund der Schwerkraft fallen dann die einzelnen Zylinder 1 nach unten, wobei sich die in Fig. 1a dargestellte Schachtstruktur ergibt. In dem in Fig. 1a gezeigten Betriebszustand ist zwischen der Unterseite des Deckels 10 und der oberen Stirnseite des Behälters 6 ein Abstand gebildet, der ausreicht, um die sich innerhalb der zylindrischen Schachtstruktur einstellende Strömung ohne größeren Widerstand entweichen zu lassen (s. Fig. 1c).

Die Zylinder 1 bestehen aus doppelseitig beschichteten Katalysatorplatten, so daß sie an der Innen- und an der Außenfläche ihre Katalysationswirkung entfalten. Diese führt zu einer Erwärmung, die innerhalb der zylindrischen Schachtstruktur einen Kamineffekt und damit eine Druckdifferenz zwischen dem oberen und dem unteren Ende dieser Schachtstruktur auslöst. Aufgrund der Gasgemischströmung innerhalb des Schachts und der damit verbundenen größeren Kühlung der Zylinderinnenwände wird ein größerer Teil der bei der katalytischen Wirkung an den Zylinderaußenflächen entstehenden Wärme nach innen abgeleitet und trägt so zur Verstärkung des Kamineffekts bei.

Aerosolfilter 2 sind am oberen Ende jedes einzelnen Zylinders 1 und am unteren Ende des untersten Zylinders vorgesehen. Vorzugsweise werden die Filter von unten nach oben feiner. Ihre Filterwirkung (Dichte, Dicke) hängt vom Einsatzfall, insbesondere von der erwarteten Art und Konzentration der Aerosole und der Wasserstoffkonzentration, ab. Bei den Filtern kann es sich um scheibenförmige Filter handeln, deren Außendurchmesser etwas geringer als der Innendurchmesser des zugehörigen Zylinders ist. Zusätzlich oder statt dieser Durchmesserdifferenz können die Filterscheiben mit einem oder mehreren Durchgangslöchern versehen sein. Es hat sich gezeigt, daß eine gute Filterwirkung auch dann erzielbar ist, wenn nicht der gesamte Luftstrom durch das Filtermaterial geleitet wird, sondern ein Teil als Bypasströmung um die Filter herum oder durch Löcher in diesen hindurch. Auf diese Weise läßt sich ein guter Kompromiß zwischen der Druckdifferenz aufgrund der Filter einerseits und der Filterwirkung andererseits erzielen, oder anders ausgedrückt, man erreicht so bei zufriedenstellender Filterwirkung eine ausreichende Strömung innerhalb der Schachtstruktur, so daß aufgrund der Sogwirkung an deren unterem Ende größere Mengen der mit den auszufilternden Aerosolen belasteten umgebenden Atmosphäre hindurchgeleitet werden kann. Die Bypasströmung sorgt zudem dafür, daß auch bei mehr oder weniger zugesetzten Filtern noch eine ausreichende Strömung aufrechterhalten bleibt. Da die Gefahr des Zusetzens des Filters am unteren Ende des untersten Zylinders am größten ist wird sein Durchmesser günstigerweise noch kleiner als der der anderen Filter gewählt werden. Im unteren Zylinder 1 können im übrigen im Bedarfsfall auch weitere mit Katalysatormaterial beschichtete Zylinder oder Platten angeordnet werden, um die Gesamtkatalysatorfläche zu vergrößern, ohne die Kompaktheit im Bereitschaftszustand zu beeinträchtigen.

Wie die Zylinder 1 ist auch der Behälter, bei dem zumindest die Innenwände zur Kaminwirkung beitragen, an seinem oberen Ende mit einer Filterscheibe 2 versehen. Auf dieser sitzt, wie sich aus Fig. 1c ergibt, ein Rohr 12, dessen Durchmesser kleiner als der der Filterscheibe ist. Das obere Ende des Rohres, das wie die Zylinder innen und außen mit Katalysatormaterial beschichtet ist, ist mit einer weitern Filterscheibe 13 verschlossen. Bei dieser Anordnung wird zunächst ein großer Teil der Gasströmung das Rohr 12 durchsetzen. Ist das Filter 13 mehr und mehr zugesetzt, kann die Strömung durch die das oberste Filter 2 umgehende Bypasströmung und den das oberste Filter außerhalb des Rohres 12 durchsetzenden Strömungsanteil aufrechterhalten werden.

An dem Behälter 6 kann ein oder können mehrere Zusatzbehälter 8 vorgesehen sein, die jeweils über ein Ventil mit dem Inneren des Behälters 6 verbunden sind. In diesen Zusatzbehältern 8 befinden sich Proben der beschichteten Katalysatorplatten aus demselben Produktionslos. In regelmäßigen Abständen kann aus solchem Zusatzbehälter eine Probe entnommen und daraufhin untersucht werden, ob noch eine ausreichende Katalysationsfähigkeit vorhanden ist. Beim Öffnen eines solchen Zusatzbehälters 8 wird automatisch das die Verbindung zum Inneren des Behälters 6 herstellende Ventil verschlossen, so daß die Schutzatmosphäre innerhalb des Behälters 6 erhalten bleibt.

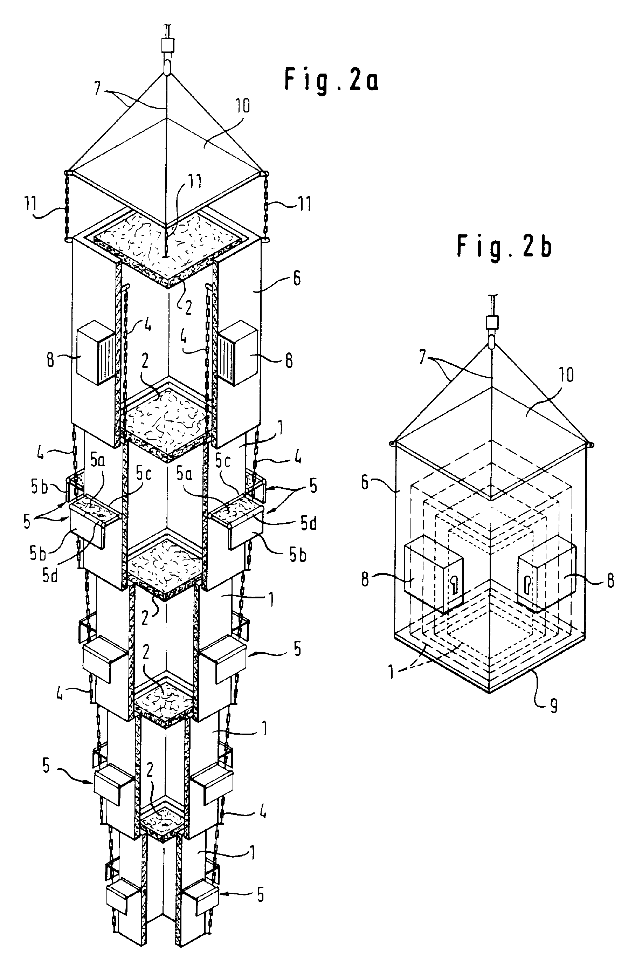

Eine zweite Ausführungsform der erfindungsgemäßen Vorrrichtung ist in den Fig. 2a und 2b dargestellt. In diesen Figuren sind Teile, die solchen in den Fig. 1a und 1b entsprechen mit denselben Bezugszahlen versehen.

Die folgende Beschreibung der zweiten Ausführungsform beschränkt sich auf die Unterschiede zu der ersten Ausführungsform. Diese liegen, wie aus einem Vergleich der Zeichnungen deutlich erkennbar, zunächst hauptsächlich darin, daß die Zylinder der ersten Ausführungsform durch Rohrstücke 1 mit rechteckigem Querschnitt ersetzt sind. Auch diese Rohrstücke sind innen und außen mit Katalysatormaterial beschichtet. Zusätzlich sind bei der in Fig. 2a dargestellten Vorrichtung Klappflügel 5 an allen vier Seiten der Außenfläche jedes Rohrstücks, in Längsrichtung etwa in dessen Mitte, angebracht. Aerosolfilter 2 sind am oberen Ende aller Rohrstücke 1 und am unteren Ende des untersten Rohrstückes angebracht. Jeder Klappflügel 5 umfaßt eine Filterplatte 5a und eine Katalysatorplatte 5b. Die Filterplatte 5a ist über ein Scharnier 5c an der Seitenwand des Rohrstücks 1 befestigt. Die Katalysatorplatte 5b ist über ein Scharnier 5d mit dem freien Ende der Filterplatte 5a verbunden. Die Scharniere sind der Einfachheit halber in Fig. 2a nur bei dem obersten Rohrstück 1 angedeutet.

In dem in Fig. 2a gezeigten Betriebszustand der Vorrichtung stehen die Filterplatten 5a der Klappflügel 5 waagerecht von dem Rohrstück 1 ab. Die Katalysatorplatten 5b sind senkrecht nach unten geklappt.

Bei der Ausführungsform von Fig. 2a ist die Filterfläche gegenüber der Ausführungsform nach Fig. 1a vergrößert. Die Filterplatten der Klappflügel bewirken eine Filterung der sich längs den Außenwänden der schachtartigen Struktur ausbildenden Gasgemischströmung.

In gleicher Weise wie bei der ersten Ausführungsform, wird auch die zweite Ausführungsform bis zum Störungsfall zweckmäßig in einer Schutzatmosphäre in einem geschlossenen Behälter 6 gehalten. Die Rohrstücke sind zu diesem Zweck so dimensioniert, daß sie ineinander geschachtelt werden können. Dazu werden die Klappflügel an die entsprechenden Seitenwände des jeweiligen Rohrstücks 1 angeklappt. Durch geeignete Federmittel oder dergleichen wird dafür gesorgt, daß sich im Störungsfall, wenn die einzelnen Rohrstücke aufgrund der Schwerkraft nach unten fallen, die Filterplatten 5a der Klappflügel 5 selbsttätig in die waagerechte Lage klappen, während sich die Katalysatorklappen 5b aufgrund der Schwerkraft senkrecht ausrichten, so daß die in Fig. 2a gezeigte Anordnung entsteht.

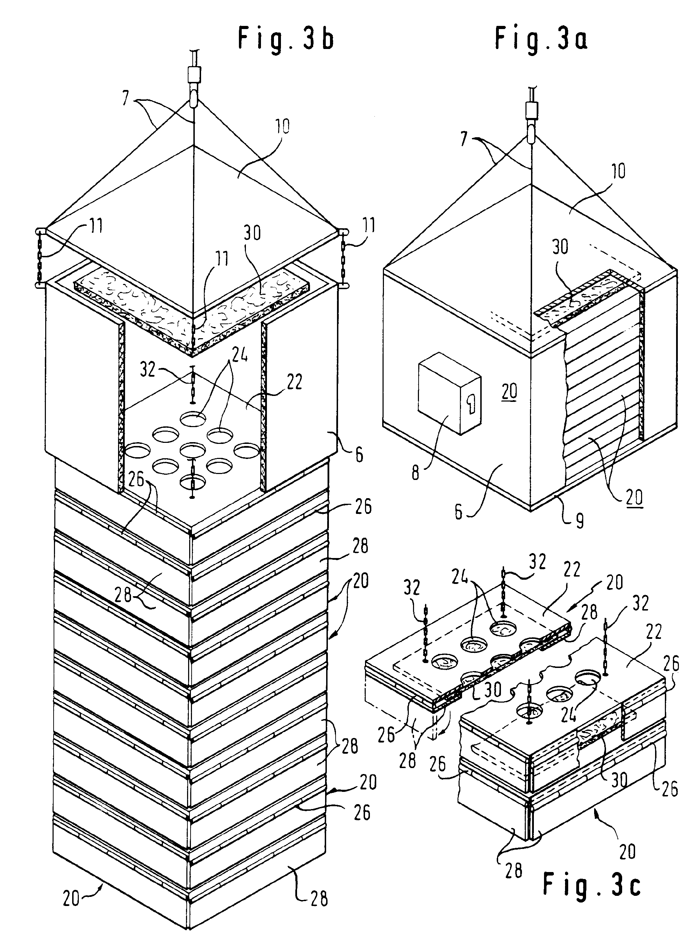

Eine dritte Ausführungsform der Erfindung, die in einen sehr kompakten Bereitschaftzustand gebracht werden kann, ist in den Fig. 3a bis 3c schematisch dargestellt.

Die Vorrichtung dieser Ausführungsform setzt sich aus einer Vielzahl von Einheiten zusammen, von denen eine in Fig. 3c perspektivisch dargestellt ist. Jede Einheit 20 umfaßt eine Katalysatorplatte 22, die mit mehreren Löchern 24 versehen ist. An allen vier Kanten der Katalysatorplatte 22 sind mittels Scharnieren 26 Seitenplatten 28 angelenkt. Im Bereitschaftzustand sind diese Seitenplatten an die Unterseite der Katalysatorplatte 22 angeklappt, wie im linken Teil von Fig. 3c dargestellt. Im Betriebszustand der Vorrichtung sind die Seitenplatten 28 nach unten geklappt (rechts in Fig. 3c dargestellt) so daß die Einheit nun die Form einer umgekehrten Schale annimmt. Die Katalysatorplatte 22 und die Seitenplatten 28 bestehen je aus doppelseitig mit Katalysatormaterial beschichteten Platten.

Unterhalb der Katalysatorplatte 22 befindet sich eine Filterplatte 30. Wie bei den vorangegangenen Ausführungsformen ist die Filterplatte 30 kleiner als die Katalysatorplatte 22 und/oder ebenfalls mit Löchern versehen (nicht dargestellt).

Im Bereitschaftzustand liegt die Filterplatte 30 zwischen der Unterseite der Katalysatorplatte 22 und den Innenflächen der angeklappten Seitenplatten 28. Bei der Ausbildung bzw. Anordnung der Scharniere 26 muß dafür Sorge getragen werden, daß dieses Aufeinanderlegen von Katalysatorplatte 22, Filterplatte 30, der zwei Seitenplatten 28 von zwei gegenüberliegenden Seiten und der zwei Seitenplatten 28 der beiden anderen gegenüberliegenden Seiten ohne gegenseitige Störung und ein freies Entfalten im Störungsfall möglich sind.

Wie in Fig. 3c angedeutet und Fig. 3b dargestellt, hängen die einzelnen Einheiten 20 mittels flexibler Verbindungselemente 32, beispielsweise in Form von Ketten, so aneinander, daß die Unterkanten der Seitenplatten 28 im Betriebszustand mit geringem Abstand über der Oberseite der Katalysatorplatte 22 der sich nach unten anschließenden Einheit liegen. Die Filterplatte 30 ist an der Katalysatorplatte 22 aufgehängt und liegt im Betriebszustand, wie rechts in Fig. 3c angedeutet, etwas unterhalb der Unterseite der Katalysatorplatte 22.

Wie bei den beiden ersten Ausführungsformen sind die Einheiten 20 im Bereitschaftszustand vorzugsweise zusammengeklappt in einer Schutzatmosphäre in einem Behälter 6 untergebracht. Da die einzelnen Einheiten, die bei dieser Ausführungsform alle gleich ausgebildet sein können, in der beschriebenen Weise sehr kompakt zusammengeklappt werden können, nimmt die Vorrichtung im Bereitschaftszustand nur ein relativ geringes Volumen ein. Der Übergang von dem in Fig. 3a dargestellten Bereitschaftszustand, wo das Gehäuse 6 beispielsweise an der Decke eines Sicherheitbehälters aufgehängt ist, in den in Fig. 3b dargestellten Betriebszustand erfolgt analog zu den voranstehend beschriebenen Ausführungsformen. D.h., der Behälter 6 löst sich vom Deckel 10, und der Boden löst sich vom Behälter 6 bzw. von dessen Seitenwänden, so daß die einzelnen Einheiten 20 aufgrund der Schwerkraft nach unten herausfallen können und die in Fig. 3b erkennbare Schachtstruktur bilden, deren Wirkung der der ersten Ausführungsform entspricht. Wie bei den vorangegangenen Ausführungsformen bildet der Behälter 6, wenn von einem solchen Gebrauch gemacht wird, den oberen Teil der Schachtstruktur. Er ist auch bei dieser Ausführungsform an der Oberseite, die sich vom Deckel 10 gelöst hat mit einer Filterplatte 30 versehen.

## Patentansprüche

1. Vorrichtung zur Entfernung von Wasserstoff und Schadstoffen aus einem Wasserstoff und Sauerstoff enthaltenden Gasgemisch mit einer Katalysatoranordnung aus einem Trägermaterial, das mit einem die Oxidation von Wasserstoff katalysierenden Material beschichtet ist, bei der die Katalysatoranordnung so beschaffen ist, daß sich in ihrem Betriebszustand aufgrund der bei der Oxidation entstehenden Wärme (Katalysationswärme) eine Konvektionsströmung einstellt, dadurch **gekennzeichnet**, daß
die Katalysatoranordnung (1) in ihrem Betriebszustand eine schachtartige Form aufweist derart, daß aufgrund der Katalysationswärme in der Katalysatoranordnung eine Druckdifferenz über die Länge der Anordnung entsteht, und daß in der Katalysatoranordnung (1) eine Filteranordnung (2) zur Entfernung von Schadstoffen aus dem durchströmenden Gasgemisch vorgesehen ist.

2. Vorrichtung nach Anspruch 1, dadurch **gekennzeichnet**, daß die Katalysatoranordnung aus mehreren einzelnen Teilen (1,) zusammengesetzt ist, die derart bemessen und untereinander verbunden sind, daß sie aus einem ineinander geschachtelten Bereitschaftszustand teleskopartig zur Bildung eines Schachts auseinanderziehbar sind.

3. Vorrichtung nach Anspruch 2, dadurch **gekennzeichnet**, daß es sich bei den einzelnen Teilen um rohrstückartige Teile mit rundem oder polygonalem Querschnitt unterschiedlichen Durchmessers bzw. unterschiedlicher Kantenlänge handelt.

4. Vorrichtung nach Anspruch 1, dadurch **gekennzeichnet**, daß die Katalysatoranordnung aus mehreren im wesentlichen gleichen Einheiten (20) zusammengesetzt ist, die derart bemessen und untereinander verbunden sind, daß sie aus einem kompakten, aufeinanderliegenden Bereitschaftszustand zur Bildung eines Schachts auseinanderziehbar sind.

5. Vorrichtung nach einem der Ansprüche 2 oder 4, dadurch **gekennzeichnet**, daß es sich bei den einzelnen Teilen (20) je um einen polygonalen, im wesentlichen ebenen Rahmen handelt, an dessen Seiten mit dem katalysierenden Material beschichtete Bleche angelenkt sind derart, daß sie aus einer Stellung im wesentlichen parallel zur Ebene des Rahmens um im wesentlichen 90° in eine Stellung im wesentlichen senkrecht zur Ebene des Rahmens verschwenkbar sind.

6. Vorrichtung nach einem der vorhergehenden Ansprüche, dadurch **gekennzeichnet**, daß wenigstens am unteren Ende und/oder am oberen Ende des Schachts ein Filter (2) vorgesehen ist.

7. Vorrichtung nach einem der Ansprüche 2 bis 6, dadurch **gekennzeichnet**, daß jedes Teil der Katalysatoranordnung mit einem gesonderten Filter (2) versehen ist.

8. Vorrichtung nach einem der Ansprüche 6 und 7, dadurch **gekennzeichnet**, daß das Filter (2) scheiben- oder plattenförmig ausgebildet ist.

9. Vorrichtung nach Anspruch 8, dadurch **gekennzeichnet**, daß die Fläche des Filter (2) kleiner als die Querschnittsfläche des vom zugehörigem Teil (1,) der Katalysatoranordnung umschlossenen Raums ist und/oder das Filter mit einem oder mehreren Durchgangslöchern versehen ist.

10. Vorrichtung nach einem der Ansprüche 5 bis 9 dadurch **gekennzeichnet**, daß es sich bei dem Rahmen um eine selbst mit dem katalysierenden Material beschichtete Platte handelt, die mit Durchströmungslöchern versehen ist.

11. Vorrichtung nach einem der Ansprüche 2 bis 10, **gekennzeichnet** durch ein gasdichtes Gehäuse zur Aufnahme der Katalysatoranordnung im Bereitschaftszustand.

## Claims

1. Apparatus for removing hydrogen and noxious substances from a gas mixture containing hydrogen and oxygen, including a catalyst arrangement comprising a carrier material which is coated with a material for catalysing the oxidation of hydrogen, wherein the catalyst arrangement is such that in the operative condition thereof a convection flow occurs as a result of the heat (heat of catalysis) which is produced in the oxidation reaction, characterised in that
the catalyst arrangement (1) in the operative condition thereof is in a shaft-like form such that a pressure difference occurs over the length of the arrangement as a result of the heat of catalysis in the catalyst arrangement, and that provided in the catalyst arrangement (1) is a filter means (2) for the removal of noxious substances from the gas mixture flowing therethrough.

2. Apparatus according to claim 1 characterised in that the catalyst arrangement is composed of a plurality of individual portions (1) which are of such dimensions and connected together in such a way that they can be telescopically extended to form a shaft from a readiness condition in which they are disposed one within the other in nesting relationship.

3. Apparatus according to claim 2 characterised in that the individual portions are tubular portions of round or polygonal cross-section of different diameters or different edge lengths.

4. Apparatus according to claim 1 characterised in that the catalyst arrangement is composed of a plurality of substantially identical units (20) which are of such dimensions and connected together in such a way that they can be extended to form a shaft from a compact readiness condition in which they are disposed one upon the other.

5. Apparatus according to one of claims 2 and 4 characterised in that the individual portions (20) are each a polygonal, substantially flat frame, to the sides of which plate members coated with the catalysing material are pivotally connected in such a way that they are pivotable from a position substantially parallel to the plane of the frame through substantially 90° into a position in which they are substantially perpendicular to the plane of the frame.

6. Apparatus according to one of the preceding claims characterised in that a filter (2) is provided at least at the lower end and/or at the upper end of the shaft.

7. Apparatus according to one of claims 2 to 6 characterised in that each portion of the catalyst arrangement is provided with a separate filter (2).

8. Apparatus according to one of claims 6 and 7 characterised in that the filter (2) is of a disc-like or plate-like configuration.

9. Apparatus according to claim 8 characterised in that the area of the filter (2) is smaller than the cross-sectional area of the space enclosed by the associated portion (1) of the catalyst arrangement and/or the filter is provided with one or more passage holes therethrough.

10. Apparatus according to one of claims 5 to 9 characterised in that the frame is a plate which is itself coated with the catalysing material and which is provided with through-flow holes.

11. Apparatus according to one of claims 2 to 10 characterised by a gas-tight housing for accommodating the catalyst arrangement in the readiness condition.

## Revendications

1. Dispositif pour l'enlèvement d'hydrogène et de matières toxiques d'un mélange de gaz contenant de l'hydrogène et de l'oxygène avec un agencement de catalyseur en un matériau de support, qui est enduit avec un matériau catalysant l'oxydation de l'hydrogène, lors duquel, l'agencement de catalyseur est ainsi créé, que dans l'état d'exploitation, en raison de la chaleur prenant naissance lors de l'oxydation (chaleur de catalysation), un écoulement de convection s'établit, caractérisé en ce que l'agencement de catalyseur (1), dans son état d'exploitation, présente une forme du type cheminée, de telle sorte, en raison de la chaleur de catalysation dans l'agencement de catalyseur, qu'une différence de pression prend naissance sur la longueur de l'agencement, et en ce que, dans l'agencement de catalyseur (1), un agencement de filtration (2) pour l'enlèvement de matières toxiques hors du mélange de gaz s'écoulant en traversant est prévu.

2. Dispositif selon la revendication 1, caractérisé en ce que l'agencement de catalyseur est composé de plusieurs parties individuelles (1), qui sont dimensionnées et reliées entre elles de telle sorte, qu'elles sont extrayables les unes des autres, à partir d'un état de disponibilité emboîtées les unes dans les autres, télescopiquement, pour la formation d'une cheminée.

3. Dispositif selon la revendication 2, caractérisé en ce qu'il s'agit, lors des parties individuelles, de parties du type pièces tubulaire, avec section transversale ronde ou polygonale, de diamètre différent ou bien de longueur d'arêtes différentes.

4. Dispositif selon la revendication 1, caractérisé en ce que l'agencement de catalyseur est composé de plusieurs unités (20) sensiblement identiques, qui sont dimensionnées et reliées entre elles de telle sorte, qu'elles sont extrayables les unes des autres, à partir d'un état de disponibilité compact, reposant les unes sur les autres, pour la formation d'une cheminée.

5. Dispositif selon une des revendications 2 ou 4, caractérisé en ce qu'il s'agit, lors des parties (20) individuelles, chaque fois, d'un cadre polygonal, pour l'essentiel plan, aux côtés duquel des tôles enduites avec le matériau catalysant sont articulées de telle sorte, qu'elles sont basculables, hors d'une position pour l'essentiel parallèle au plan du cadre, pour l'essentiel de 90°, dans une position pour l'essentiel perpendiculaire au plan du cadre.

6. Dispositif selon une des précédentes revendications, caractérisé en ce qu'au moins à l'extrémité inférieure et/ou à l'extrémité supérieure de la cheminée, un filtre (2) est prévu.

7. Dispositif selon une des revendications 2 à 6, caractérisé en ce que chaque partie de l'agencement de catalyseur est pourvue d'un filtre (2) particulier.

8. Dispositif selon une des revendications 6 et 7, caractérisé en ce que le filtre (2) est constitué en forme de disque ou de plaque.

9. Dispositif selon la revendication 8, caractérisé en ce que la surface du filtre (2) est plus petite que la surface de section transversale de l'espace entouré par la partie (1) de l'agencement de catalyseur associée, et/ou le filtre est pourvu d'un ou plusieurs trous de passage.

10. Dispositif selon une des revendications 5 à 9, caractérisé en ce qu'il s'agit, lors du cadre, d'une plaque enduite elle-même avec le matériau catalysant, qui est pourvue de trous d'écoulement traversant.

11. Dispositif selon une des revendications 2 à 10, caractérisé par une enveloppe étanche au gaz, pour la réception de l'agencement de catalyseur dans l'état de disponibilité.
